# FASCICULE DE BREVET EUROPEEN

(11) **EP 0 645 959 B1**
(45) Date de publication et mention de la délivrance du brevet: **03.04.1996**
(21) Numéro de dépôt: 93913150.4
(22) Date de dépôt: 16.06.1993
(51) Int. Cl.: A01K 51/00, A01K 47/04

(54) **PROCEDE DE MODULATION DU COMPORTEMENT DES ABEILLES OUVRIERES PAR DES PHEROMONES DE COUVAIN**
VERFAHREN ZUR MODULATION DES BIENENVERHALTENS MIT ZUCHTPHEROMONEN
METHOD FOR ALTERING WORKER BEE BEHAVIOUR WITH BROOD PHEROMONES

(30) Priorité: 16.06.1992 FR 9207283
(43) Date de publication de la demande: 05.04.1995
(73) Titulaire: INSTITUT NATIONAL DE LA RECHERCHE AGRONOMIQUE, F-75341 Paris Cédex 07 (FR)
(72) Inventeur: LE CONTE, Yves, F-84250 Le Thor (FR); SRENG, Leam, F-13400 Aubagne (FR); TROUILLER, Jérome, Burnaby, British Columbia V5A 1S6 (CA); POITOU, Serge Henri, F-84310 Morières-les-Avignon (FR)
(74) Mandataire: Gutmann, Ernest
(86) Numéro de dépôt international: FR9300595
(87) Numéro de publication internationale: WO9325070

(56) Documents cités:
- US-A- 4 990 331
- BULLETIN TECHNIQUE APICULTURE vol. 2, no. 2, 1975, pages 15 - 30 FRESNAY 'LES METHODES D'ELEVAGE ET LA QUALITE DE REINES' cité dans la demande
- NATURWISSENSCHAFTEN no. 77, 1990, pages 334 - 336 LE CONTE ET ALL 'IDENTIFICATION OF A BROOD PHEROMONE IN HONEY BEES' cité dans la demande
- ANIMAL BEHAVIOUR no. 31, 1983, pages 539 - 545 FREE & WINTER 'BROOD RECOGNITION BY HONEYBEE (APIS MELLIFLORA) WORKERS' cité dans la demande
- SCIENCE vol. 245, 1989, pages 638 - 639 LE CONTE 'ATTRACTION OF THE PARASITIC MITE VARRAO TO THE DRONE LARVAE OF HONY BEES BY SIMPLE ALIPHATIC ESTERS' cité dans la demande

## Description

Il a déjà été suggéré que le comportement nourricier des ouvrières était tributaire de signaux éventuellement chimiques émis par les larves elles-mêmes, ces signaux permettant alors aux ouvrières de détecter le sexe, la caste et le stade de développement des larves en cours d'élevage (cf. par exemple Free, J.B., Winder, M.E. : Amim. Behav. 31, 539 (1983).

Dix molécules ont, il y a peu, été identifiées sur les larves d'abeilles (Le Conte et al, 1989 Science, Vol. 245, pp.638-639). Certaines d'entre elles ont été caractérisées comme des phéromones de couvain déclenchant le comportement d'operculation, par les ouvrières, des cellules contenant des larves de 9 jours (Le Conte et al, 1990, Naturwissenschaften 77, 334-336). Dans le cadre des études qui ont conduit à la présente invention, il a été montré que ces molécules sont présentes également sur les larves plus jeunes, et que le bouquet de molécules évolue qualitativement et quantitativement en fonction de l'âge. L'évolution de ce bouquet paraît être à la base de la reconnaissance de l'âge des larves par les ouvrières.

L'invention met à profit ces constatations pour fournir des moyens permettant d'orienter ou de réorienter le comportement des ouvrières, en fonction de buts plus particulièrement choisis par l'apiculteur, selon qu'il souhaite induire une meilleure acceptation des larves au début de l'élevage, accroître la production de gelée royale, réguler l'alimentation des larves pour favoriser le développement de reines, etc..., voire favoriser simultanément plusieurs de ces orientations.

Il paraît souhaitable de rappeler au préalable les définitions d'un certain nombre de termes de métier qui apparaîtront dans la suite de cette description. Elles sont dérivées de celles qui en ont été données par J. Fresnaye dans Bull. Tech. apic., 1975, 2, n°2, 15-30.

### STARTER (ou RUCHE ORPHELINE) :

ruchette à 4 ou 5 cadres, à dessous grillagé, sans sortie possible d'abeilles, que l'on peuple par un "paquet d'abeilles" (donc sans reine) de 1 kg à 1 kg 500 environ, et qui permet de faire démarrer l'élevage royal.

### FINISSEUR (ou RUCHE ELEVEUSE) :

ruche peuplée d'une forte colonie, utilisée pour la finition des cellules royales, à leur sortie du starter ; elle est divisée par une grille verticale, n'autorisant pas le passage de la reine, en deux compartiments dont l'un, orphelin, à 4 ou 5 cadres, recevra le contenu du starter et l'autre conservera le reste de la colonie, la reine incluse. On utilise souvent à cet effet de vastes ruches à 15 ou 17 cadres limitant ainsi les risques d'essaimage de la partie pourvue d'une reine.

### GREFFAGE DE LARVES :

ce terme consacré par la pratique apicole consiste en un simple transfert de jeunes larves d'ouvrières de leur cellule d'origine dans une ébauche de cellule royale appelée "cupule".

### CUPULES :

ce sont des ébauches de cellules royales généralement en cire, mais qui peuvent également être en matière plastique.

### FAMILIARISATION :

c'est l'opération qui consiste à placer des cupules vides (préalablement fixées sur barrettes, elles-mêmes placées dans un cadre "porte-barrettes") dans une colonie normale. Les abeilles de cette colonie ébaucheront la construction des cellules royales et y déposeront une substance dite de "familiarisation" qui favorisera leur acceptation.

### ACCEPTATION:

elle a lieu si les abeilles ont amorcé l'élevage royal de la larve transférée ; il y a présence de la larve vivante et de gelée royale dans la cellule ; la cupule est travaillée et rattachée au support par des contreforts de cire. L'acceptation peut se constater dès le lendemain de l'opération de constitution du starter, au moment de son transfert dans la ruche éleveuse (finisseur). Les larves non acceptées sont détruites par les abeilles de la colonie éleveuse.

### BARRETTE "PORTE-CUPULES" :

c'est une petite planchette de bois (type bas-de-cadre de hausse), recouverte sur une face d'une semelle de 4 à 5 mm de cire et sur laquelle on fixe les cupules avant leur mise en familiarisation.

Ces questions de vocabulaire ayant été précisées, le procédé selon l'invention du procédé de modulation du comportement des abeilles ouvrières d'une colonie éleveuse dans une ruche orpheline ou starter ou dans la partie orpheline d'une ruche, ce procédé comportant le greffage de larves dans les cupules d'un cadre ou rayon approprié et l'introduction de ce cadre ou rayon dans ce cadre ou rayon dans ce starter ou partie orpheline de ruche au contact de la colonie éleveuse, et caractérisé par l'incorporation d'une proportion efficace d'un bouquet à base d'une ou plusieurs phéromones à la matière constitutive, notamment de la cire desdites cupules, préalablement au greffage des larves dans celles-ci.

Par "phéromone" on entend toute molécule, notamment ester d'acide gras ou aldéhyde, ou mélange de molécules du type de celles qui sont susceptibles d'être extraites de larves d'abeilles par de l'hexane, les molécules étant aptes à fournir un signal pour des ouvrières nourrissières de larves dans un élevage de reines.

Les résultats fournis dans les tableaux 1 et 2, ci-après, permettent à l'homme du métier d'opérer de premiers choix quant à la nature du (ou des) constituant(s) à incorporer à la matière constitutive des cupules, selon la nature du but poursuivi. Dans les cadres mis en oeuvre pour la réalisation des essais en cause, il doit être remarqué que :
- les techniques mises en oeuvre dans les exemples, étaient pratiquement conformes à celles décrites par J.Fresnaye dans l'article susdit ;
- les cadres étaient équipés de cupules en cire ;
- les concentrations en phéromones sont exprimées en pourcentage en poids par rapport à la cire utilisée ;
- les mélanges d'esters ont été reconstitués à partir des constituants identifiés dans un extrait hexanique total de larves d'abeilles, Apis mellifica ligustica mâles et femelles; (larves d'ouvrières, et larves de mâles (faux-bourdons). A titre d'exemple, un mélange dans les proportions suivantes :

| | | |
|---|---|---|
| a) | palmitate de méthyle (PM) | 0,26 µg/Eql |
| b) | palmitate d'éthyle (PE) | 0,09 µg/Eql |
| d) | stéarate de méthyle (SM) | 0,26 µg/Eql |
| f) | stéarate d'éthyle (SE) | 0,08 µg/Eql |
| c) | oléate de méthyle (OM) | 0,07 µg/Eql |
| e) | oléate d'éthyle (OE) | 0,03 µg/Eql |
| g) | linoléate de méthyle (LNM) | 0,05 µg/Eql |
| h) | linoléate d'éthyle (LNE) | 0,01 µg/Eql |
| i) | linolénate de méthyle (LM) | 0,59 µg/Eql |
| j) | linolénate d'éthyle (LE) | 0,18 µg/Eql |

correspond à des larves agées de trois jours.

Il a été plus particulièrement procédé comme suit :
Chaque ruche des colonies éleveuses testées, choisies selon leurs aptitudes à récolter, a été partagée en deux parties à l'aide d'une grille susceptible d'être traversée par les ouvrières, mais pas par la reine. C'est dans la partie "orpheline" que l'élevage royal peut avoir lieu.

Deux baguettes, sur lesquelles avaient au préalable été placées des cupules de cire (Fresnaye, 1975), ont été introduites dans la partie orpheline de la ruche, (25 cupules par baguette). Une goutte de gelée royale diluée, puis une jeune larve d'ouvrière âgée d'un jour environ, ont été successivement placée au fond de chaque cupule. Les larves avaient été prélevées de façon homogène dans un cadre provenant d'une colonie dont avait au préalable été reconnue l'aptitude à récolter.

Après trois jours, les baguettes ont été prélevées dans la colonie éleveuse afin d'extraire la gelée royale déposée dans les cupules par les ouvrières. Les quantités de gelée royale déposée dans les cupules contenant des larves acceptées et les larves elles-mêmes ont également été pesées.

Dans cette expérience, les esters d'acides gras utilisés, soit à titre individuel, soit en mélange selon les proportions qui ont été indiquées plus haut, ont été incorporés à la cire constituant les cupules. Le mélange avec la cire a été fait à chaud, et à trois concentrations : 1/100, 1/1.000, 1/10.000. Ces concentrations correspondent soient à celles des constituants, lorsque ceux-ci ont été utilisés séparément, soit à celle de la totalité du mélange d'esters et le cas échéant, d'aldéhydes correspondant à des larves respectivement agées de trois et de huit jours. En effet, deux aldéhydes ont été identifiés récemment sur les larves. Des cupules témoins, sans esters, ont également été mises en oeuvre à des fins de comparaison. L'expérience a été répétée sur huit colonies, à onze reprises différentes. Au total, 1452 cupules ont été testées, avec un minimum de trente cupules acceptées par ester(s) et par concentration.

### RESULTATS

Des différences significatives ont été enregistrées, selon l'ester utilisé, quant au pourcentage de larves acceptées par les ouvrières, au poids de gelée royale déposée par cupule acceptée et au poids moyen des larves après trois jours d'expérimentations (Tableau 1).

Le pourcentage obtenu d'acceptation moyen des cellules a varié, en fonction de l'ester utilisé, entre 79,2 et 46 %.

Les quantités de gelée les plus importantes, en moyenne par cellule acceptée, ont été observées avec l'octodécanal à 1:10.000, le mélange ester + aldéhydes à 1/1.000 et le LM à 1/10.000.

La combinaison du pourcentage d'acceptation et de la quantité de gelée produite par cellules acceptée donne la quantité moyenne de gelée recueillie par cellule greffée (Tableau 1).

Le regroupement des concentrations pour chaque ester mets en avant l'intérêt d'utiliser le stéarate de méthyle à cause de sa capacité à promouvoir à la fois une très bonne acceptation et une augmentation des quantités de gelée déposée dans les cupules (Tableau 2).

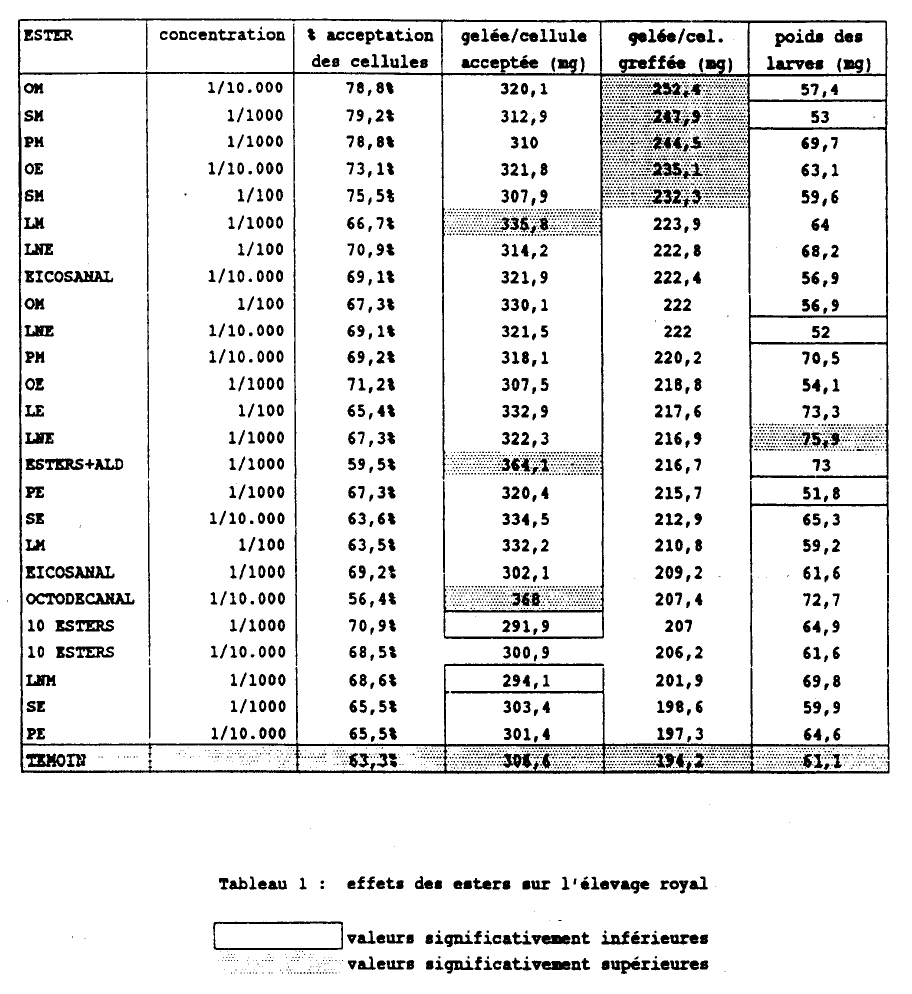

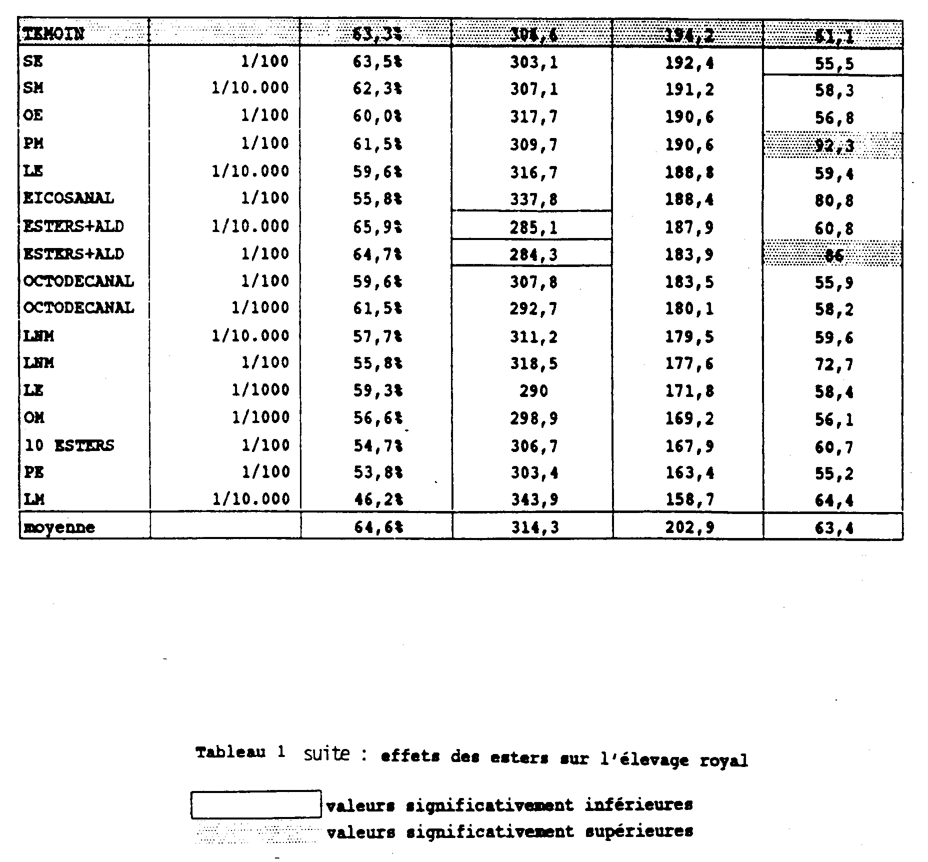

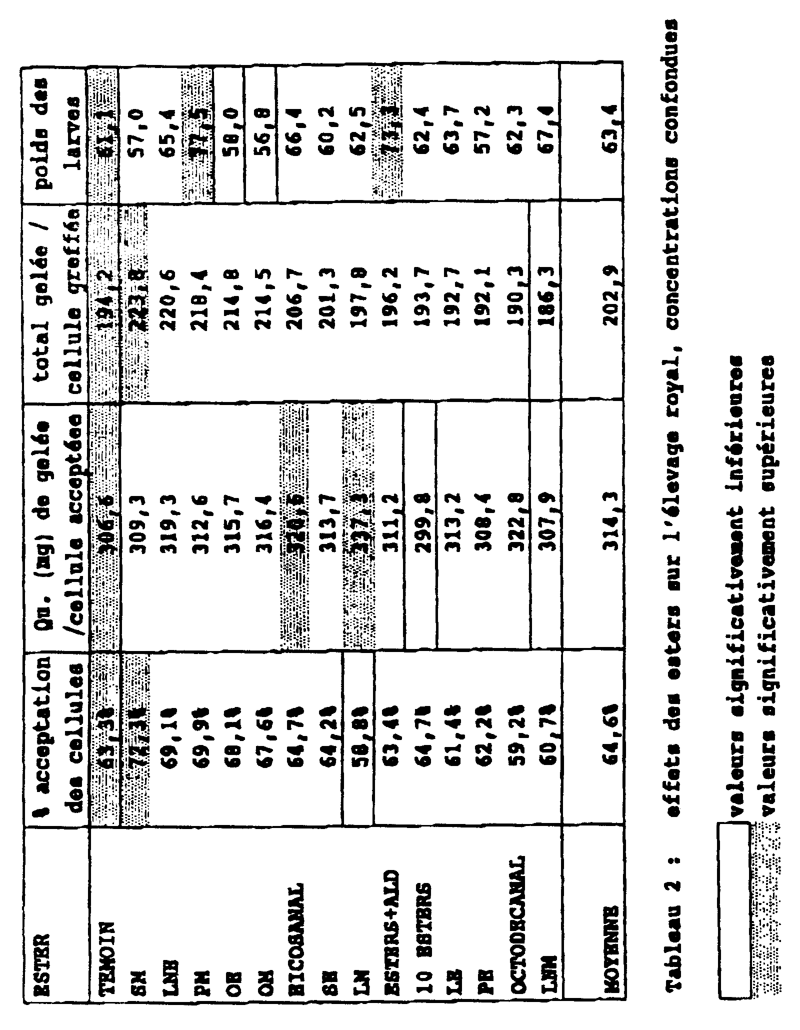

De ces résultats découle l'effet de modulation que des concentrations convenablement ajustées d'esters et/ou d'aldéhydes convenablement choisis, pris séparément ou en mélange, peuvent exercer sur le comportement des ouvrières dans une ruche orpheline, lorsque ces molécules sont incorporées à la matière, notamment la cire, dont les cupules Il a en particulier été constaté que :
(i) les ouvrières, attirées par les molécules, peuvent se regrouper en nombre plus important autour des cupules traitées et augmenter le taux d'acceptation des larves par les ouvrières ;
(ii) les molécules peuvent stimuler le comportement de nourrissement des larves, en particulier accroître les quantités de gelée royale déposées dans les cupules ;
(iii) l'attraction des ouvrières vers les cupules traitées peut s'accompagner d'une réduction des risques d'essaimage.

L'invention a permis la mise en évidence d'une plasticité de la production de gelée royale en fonction des esters utilisés, de la capacité des ouvrières à produire sélectivement un type et/ou une quantité de gelée, en fonction de l'odeur qu'elles percoivent, notamment en fonction du bouquet phéromonal émis par la larve selon son âge.

Dans l'une de ses variantes l'invention met à la disposition des apiculteurs une méthode simple, basée sur l'utilisation desdits esters et/ou aldéhydes, permettant d'optimiser qualitativement et quantitativement la production de gelée royale. A ce jour, l'invention permet des augmentations de production de gelée royale, notamment avec des bouquets de phéromones à base, principalement :
- d'octodécanal,
- de mélanges reconstitués de phéromones et d'aldéhydes,
- de linoléate de méthyle
utilisés en concentrations appropriées par rapport à la cire ou autre matière constitutive des cupules.

D'autres bouquets de phéromones préférés sont à base :
- d'oléate de méthyle ou d'éthyle, en concentrations s'étageant de 10⁻³ à 10⁻² en poids, par rapport à la matière constitutive,
- de palmitate de méthyle, en une concentration de l'ordre de 10⁻³ en poids.

Aux termes d'essais répétés, les accroissements de production de gelée royale dans des cupules traitées se sont avérés être de l'ordre de :
28 % pour le stéarate de méthyle,
25 % pour l'oléate d'éthyle et
12 % pour le palmitate de méthyle
par cupule greffée et par rapport à des cupules témoins, à la fin d'une période de nourrissement des larves de trois jours. D'une façon préférée la gelée royale produite sera prélevée au plus tard environ 1 jour avant l'operculation des cupules par les ouvrières, soit environ 3 jours après le greffage des cupules.

Le choix judicieux des esters et/ou aldéhydes du genre en question et de leurs concentrations respectives, ouvre également la voie à une optimisation de la production de reines dans des élévages artificiels, dès lors que le développement de ces reines peut être tributaire d'une variation, notamment d'un accroissement pondéral plus rapide des larves appelées à leur donner naissance, voire d'une augmentation des pourcentages de larves acceptées (notamment avec le stéarate de méthyle). En effet la variabilité du poids des larves en fonction des esters, met en évidence l'intérêt d'utiliser ces composés pour optimiser la production de reines et notamment, améliorer la quantité et surtout la qualité des reines obtenues en élevage artificiel. La technique de production de reines est donc identique à la technique de production de gelée royale, du moins dans sa première phase. Les cupules seront retenues plus longtemps au sein de la colonie, pendant le temps requis au développement futur de ces reines.

En particulier lorsqu'un accroissement du poids des larves en cours de nourrissement est recherché, on aura avantageusement recours à un bouquet de phéromones à base, principalement, soit de palmitate de méthyle, notamment en une concentration de l'ordre de 10⁻², soit de palmitate d'éthyle, notamment en une concentration de l'ordre de 10⁻³ en poids vis à vis de la susdite matière constitutive.

L'invention concerne également les cupules, notamment pour (ou de) rayons ou cadres pour starter ou ruche éleveuse, dans lesquelles peuvent être greffées des larves d'abeille, caractérisées par la présence dans leur matière constitutive, notamment cire, d'une ou plusieurs phéromones (bouquet) choisies et en concentrations aptes à permettre la modulation du comportement des abeilles ouvrières de la colonne éleveuse.

Le plus souvent ces phéromones sont incorporées à ladite matière constitutive, notamment la cire, par exemple après mélange à chaud. Des phéromones préférées, utilisées seules ou en mélange avec d'autres phéromones, à des concentrations également préférées ont déjà été rappelées plus haut, notamment en rapport avec des variantes préférées de l'invention.

Il va de soi que l'invention ne saurait être limitée à ces cas préférés.

Il est à la portée de l'homme du métier au fait des résultats fournis dans la présente description, de choisir les phéromones les plus performantes et d'ajuster leurs concentrations dans la matière constitutive des cupules pour aboutir de façon efficace au résultat escompté, accroissement de la production de gelée royale, accroissement plus rapide du poids des larves en cours de nourrissement, etc...

Dans ce qui précède il a également été fait référence, surtout à l'incorporation des phéromones à la cire par mélange à chaud. Il va de soi que toute autre forme d'incorporation, voire même de dépôt sur la matière constitutive des cupules peut être envisagée, dès lors que le résultat olfactif pour les ouvrières serait approximativement le même.

## Revendications

1. Procédé de modulation du comportement des abeilles ouvrières d'une colonie éleveuse dans une ruche orpheline ou starter ou dans la partie orpheline d'une ruche, comportant le greffage de larves dans les cupules d'un cadre ou rayon approprié et propres à permettre le nourrissement desdites larves par la colonie éleveuse, et l'introduction de ce cadre ou rayon dans ce starter ou cette partie orpheline de ruche au contact de la colonne éleveuse, ce procédé étant caractérisé par l'incorporation d'une proportion efficace d'un bouquet à base d'une ou plusieurs phéromones à la matière constitutive, notamment cire desdites cupules, préalablement au greffage des larves dans celles-ci.

2. Procédé selon la revendication 1, caractérisé en ce que le bouquet de phéromones est tel qu'il permette l'accroissement des pourcentages d'acceptation des larves greffées par les ouvrières.

3. Procédé selon la revendication 2, caractérisé en ce que le bouquet de phéromones est à base principalement de stéarate de méthyle.

4. Procédé selon la revendication 1, caractérisé en ce que le bouquet de phéromones est tel qu'il permette l'accroissement de la quantité de gelée royale produite par les ouvrières.

5. Procédé selon la revendication 4, caractérisé en ce que le bouquet de phéromones est à base, principalement, soit d'octodécanal, soit d'un mélange reconstitué de phéromones et d'aldéhydes, soit de linoléate de méthyle.

6. Procédé selon la revendication 4, caractérisé en ce que le bouquet de phéromones est à base, principalement, soit d'oléate de méthyle ou d'éthyle en une concentration de 10⁻³ à 10⁻² en poids de la susdite matière constitutive, soit de palmitate de méthyle en une concentration de l'ordre de 10⁻³ en poids de la susdite matière constitutive.

7. Procédé selon la revendication 1, caractérisé en ce que le bouquet de phéromones est choisi tel qu'il permette l'accroissement plus rapide du poids des larves en cours de nourrissement.

8. Procédé selon la revendication 7, caractérisé en ce que le bouquet de phéromones est à base, principalement, soit de palmitate de méthyle, notamment en une concentration de l'ordre de 10⁻², soit de palmitate d'éthyle, notamment en une concentration de l'ordre de 10⁻³ en poids de la susdite matière constitutive.

9. Cupule de rayon ou cadre pour starter ou ruche éleveuse dans laquelle peut être greffée une larve d'abeille, caractérisée par la présence dans sa matière constitutive, notamment la cire, d'une proportion d'un bouquet à base d'une ou de plusieurs phéromones, choisies en concentrations ajustées de façon à permettre la modulation du comportement des abeilles ouvrières de la colonie éleveuse, notamment dans le sens d'un accroissement du taux d'acceptation des larves par les ouvrières ou des quantités de gelée royale déposée dans les cupules correspondantes, du poids des larves acceptées ou des quantités de gelée royale déposées dans le cupules par les ouvrières.

10. Cupule selon la revendication 9, caractérisée en ce que le bouquet de phéromones est à base principalement de stéarate de méthyle.

11. Cupule selon la revendication 9, caractérisée en ce que le bouquet de phéromones est à base principalement, soit d'octodécanal, soit d'un mélange reconstitué de phéromones et d'aldéhydes, soit de linoléate de méthyle.

12. Cupule selon la revendication 9, caractérisée en ce que le bouquet de phéromones est à base principalement, soit d'oléate de méthyle ou d'éthyle en une concentration de 10⁻³ à 10⁻² en poids de la susdite matière constitutive, soit à base de palmitate de méthyle en une concentration de l'ordre de 10⁻³ en poids de la susdite matière constitutive.

13. Cupule selon la revendication 9, caractérisé en ce que le bouquet de phéromones est à base principalement, soit de palmitate de méthyle, notamment en une concentration de l'ordre de 10⁻², soit de palmitate d'éthyle, notamment en une concentration de l'ordre de 10⁻³ en poids de la susdite matière constitutive.

## Claims

1. Process for changing the behaviour of worker-bees of a breeding colony in an orphan or starter hive or in the orphan section of a hive, comprising transplantation of larvae into the cups of an appropriate frame or shelf suitable for enabling feeding of said larvae by the breeding colony and introduction of this frame or shelf into this starter or this orphan section in contact with the breeding colony, this process being characterized by incorporation of an effective proportion of a bouquet based on one or more pheromones into the component material, in particular wax, of said cups before transplantation of the larvae into these.

2. Process in accordance with claim 1, characterized in that the bouquet of pheromones is such that it enables the increase in percentages of acceptance, by workers, of the larvae transplanted.

3. Process in accordance with claim 2, characterized in that the bouquet of pheromones is mainly based on methyl stearate.

4. Process in accordance with claim 1, characterized in that the bouquet of pheromones is such that it enables the increase in the quantity of royal jelly produced by the workers.

5. Process in accordance with claim 4, characterized in that the bouquet of pheromones is based mainly on either octadecanal, a reconstituted mixture of pheromones and aldehydes, or methyl linoleate.

6. Process in accordance with claim 4, characterized in that the bouquet of pheromones is based mainly either on methyl or ethyl oleate of a concentration of 10⁻³ to 10⁻² by weight of the aforementioned component material or on methyl palmitate of a concentration of the order of 10⁻³ by weight of said component material.

7. Process in accordance with claim 1, characterized in that the bouquet of pheromones is chosen such that it enables more rapid increase in weight of the larvae being fed.

8. Process in accordance with claim 7, characterized in that the bouquet of pheromones is based mainly either on methyl palmitate of a concentration of the order of 10⁻² in particular, or on ethyl palmitate of a concentration of the order of 10⁻³ by weight of said component material in particular.

9. Shelf or frame cup for a starter or breeding hive into which a bee-larva can be transplanted, characterized by the presence in its component material, in particular wax, of a proportion of a bouquet based on one or more pheromones, selected at adapted concentrations such that the behaviour of the worker-bees of the breeding colony can be varied, particularly for increasing the rate of acceptance of the larvae by the workers or the quantities of royal jelly deposited in the corresponding cups, the weight of the larvae accepted or the quantities of royal jelly deposited in the cups by the workers.

10. Cup in accordance with claim 9, characterized in that the bouquet of pheromones is mainly based on methyl stearate.

11. Cup in accordance with claim 9, characterized in that the bouquet of pheromones is based mainly either on octadecanal or on a reconstituted mixture of pheromones and aldehydes, or on methyl linoleate.

12. Cup in accordance with claim 9, characterized in that the bouquet of pheromones is based mainly either on methyl oleate or ethyl oleate of a concentration of 10⁻³ to 10⁻² by weight of said component material or on methyl palmitate of a concentration of the order of 10⁻³ by weight of said component material.

13. Cup in accordance with claim 9, characterized in that the bouquet of pheromones is based mainly either on methyl palmitate of a concentration of the order of 10⁻² in particular, or on ethyl palmitate of a concentration of the order of 10⁻³ by weight of said component material in particular.

## Patentansprüche

1. Verfahren zur Abänderung des Verhaltens von Arbeitsbienen eines Zuchtvolks in einem verwaisten Bienenstock bzw. Starter oder im verwaisten Teil eines Bienenstocks, das die Einbringung der Larven in die Weiselnäpfchen eines geeigneten Rahmens bzw. geeigneter Waben, wobei diese Weiselnäpfchen die Ernährung der Larven durch das Zuchtvolk ermöglichen, und das Einsetzen dieses Rahmens bzw. dieser Waben in den genannten Starter bzw. den verwaisten Teil des Bienenstocks im Kontakt mit dem Zuchtvolk umfaßt, dadurch gekennzeichnet, daS man eine wirksame Menge eines Buketts auf der Basis eines oder mehrerer Pheromone dem Hauptbestandteil der Weiselnäpfchen, insbesondere dem Wachs, bevor man in diese die Larven einbringt, zusetzt.

2. Verfahren nach Anspruch 1, dadurch gekennzeichnet, daß das Bukett der Pheromone so geartet ist, daß es die Zunahme des Prozentsatzes der Akzeptanz der durch die Arbeiterinnen eingebrachten Larven ermöglicht.

3. Verfahren nach Anspruch 2, dadurch gekennzeichnet, daß das Bukett der Pheromone hauptsächlich auf der Basis von Methylstearat beruht.

4. Verfahren nach Anspruch 1, dadurch gekennzeichnet, daß das Bukett der Pheromone so geartet ist, daß es die Zunahme der Menge an dem von den Arbeiterinnen produzierten Gelee Royal ermöglicht.

5. Verfahren nach Anspruch 4, dadurch gekennzeichnet, daß das Bukett der Pheromone in erster Linie auf der Basis von Octodecanal oder eines aus Pheromonen und Aldehyden gebildeten Gemischs, das an entsprechende natürliche Gemische möglichst nahe herankommt, oder von Methyllinoleat beruht.

6. Verfahren nach Anspruch 4, dadurch gekennzeichnet, daß das Bukett der Pheromone in erster Linie auf der Basis von Methyl- oder Ethyloleat in einer Konzentration von 10⁻³ bis 10⁻², bezogen auf das Gewicht des Hauptbestandteils, oder Methylpalmitat in einer Konzentration in der Größenordnung von 10⁻³, bezogen auf das Gewicht des Hauptbestandteils, beruht.

7. Verfahren nach Anspruch 1, dadurch gekennzeichnet, daß das Bukett der Pheromone so ausgewählt wird, daß es einen rascheren Gewichtszuwachs der Larven im Verlaufe der Ernährung ermöglicht.

8. Verfahren nach Anspruch 7, dadurch gekennzeichnet, daß das Bukett der Pheromone in erster Linie auf der Basis von Methylpalmitat, insbesondere in einer Konzentration in der Größenordnung von 10⁻², oder Ethylpalmitat, insbesondere in einer Konzentration in der Größenordnung von 10⁻³, bezogen auf das Gewicht des Hauptbestandteils, beruht.

9. Weiselnäpfchen der Waben bzw. des Rahmens für einen Starter bzw. ein Zuchtvolk, in dem eine Bienenlarve gezüchtet werden kann, dadurch gekennzeichnet, daß es in seinem Hauptbestandteil, insbesondere Wachs, eine Menge eines Buketts auf der Basis eines oder mehrerer Pheromone enthält, die in eingestellten Konzentrationen so ausgewählt werden, daß sie die Abänderung des Verhaltens von Arbeitsbienen eines Zuchtvolks, insbesondere im Sinne eines Zuwachses des Prozentsatzes der Akzeptanz der Larven durch die Arbeiterinnen oder der Mengen des in den entsprechenden Weiselnäpfchen abgelegten Gelee Royal sowie des Gewichts der akzeptierten Larven bzw. der Mengen des in den Weiselnäpfchen von den Arbeiterinnen abgelegten Gelee Royal ermöglichen.

10. Weiselnäpfchen nach Anspruch 9, dadurch gekennzeichnet, daß das Bukett der Pheromone hauptsächlich auf der Basis von Methylstearat beruht.

11. Weiselnäpfchen nach Anspruch 9, dadurch gekennzeichnet, daß das Bukett der Pheromone hauptsächlich auf der Basis von Octodecanal oder eines aus Pheromonen und Aldehyden gebildeten Gemischs, das an entsprechende natürliche Gemische möglichst nahe herankommt, oder von Methyllinoleat beruht.

12. Weiselnäpfchen nach Anspruch 9, dadurch gekennzeichnet, daß das Bukett der Pheromone in erster Linie auf der Basis von Methyl- oder Ethyloleat in einer Konzentration von 10⁻³ bis 10⁻², bezogen auf das Gewicht des Hauptbestandteils, oder auf der Basis von Methylpalmitat in einer Konzentration in der Größenordnung von 10⁻³, bezogen auf das Gewicht des Hauptbestandteils, beruht.

13. Weiselnäpfchen nach Anspruch 9, dadurch gekennzeichnet, daß das Bukett der Pheromone in erster Linie auf der Basis von Methylpalmitat, insbesondere in einer Konzentration in der Größenordnung von 10⁻², oder Ethylpalmitat, insbesondere in einer Konzentration in der Größenordnung von 10⁻³, bezogen auf das Gewicht des Hauptbestandteils, beruht.
